(19) Europäisches Patentamt
European Patent Office
Office européen des brevets

(11) **EP 4 694 457 A1**

(12) **EUROPEAN PATENT APPLICATION**
published in accordance with Art. 153(4) EPC

(43) Date of publication:
**11.02.2026 Bulletin 2026/07**

(21) Application number: **24784011.9**

(22) Date of filing: **07.03.2024**

(51) International Patent Classification (IPC):
*H04W 72/0453* (2023.01)

(52) Cooperative Patent Classification (CPC):
**H04L 1/1607; H04L 1/1812; H04W 72/0453;
H04W 72/25; H04W 72/40**

(86) International application number:
**PCT/CN2024/080467**

(87) International publication number:
**WO 2024/207926 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310367137**

(71) Applicant: **CICT Connected and Intelligent
Technologies Co., Ltd.
Chongqing 400041 (CN)**

(72) Inventors:
• **WANG, Yakun
Chongqing 400041 (CN)**
• **ZHAO, Rui
Chongqing 400041 (CN)**
• **WEN, Xiaoran
Chongqing 400041 (CN)**
• **ZHENG, Shilei
Chongqing 400041 (CN)**

(74) Representative: **Glawe, Delfs, Moll
Partnerschaft mbB
Postfach 13 03 91
20103 Hamburg (DE)**

(54) **SIDELINK RESOURCE SELECTION METHOD AND APPARATUS, AND TERMINAL**

(57)    The present disclosure relates to the technical field of communications. Disclosed are a method and apparatus for selecting sidelink resources, and a terminal. The method, which is applied to a first terminal, includes: acquiring Physical Sidelink Feedback Channel (PSFCH) resource configuration information; and determining a PSFCH transmission resource, wherein the PSFCH transmission resource is configured for PSFCH transmission, and the PSFCH transmission carries Hybrid Automatic Repeat Request Acknowledgment (HARQ-ACK) information related to Physical Sidelink Shared Channel (PSSCH) reception.

PSFCH — 101

where the PSFCH transmission resource is configured for PSFCH transmission and the PSFCH transmission carries Hybrid Automatic Repeat Request Acknowledgment HARQ- information related to Physical Sidelink Shared Channel PSSCH reception — 102

Fig. 1

**Description**

**Cross-Reference to Related Application**

This present disclosure claims priority to Chinese Patent Application No. 202310367137. X, filed in China on April 7, 2023, the disclosure of which is hereby incorporated by reference in its entirety.

**Technical Field**

The present disclosure relates to the technical field of communications, and in particular to a method and apparatus for selecting sidelink resources, and a terminal.

**Background**

In the design of Sidelink on Unlicensed Spectrum (SL-U), two structures are designed for transmission of a Physical Sidelink Control Channel (PSCCH)/Physical Sidelink Shared Channel (PSSCH): an Interlaced Resource Block (IRB)-based structure and a contiguous Physical Resource Block (PRB)-based structure. For the above structures, a method for selecting a Physical Sidelink Feedback Channel (PSFCH) is not specified in the current standard.

**Summary**

An objective of the present disclosure is to provide a method and apparatus for selecting sidelink resources, and a terminal, thereby solving the problem in the related art that there is no PSFCH resource selection method for an SL-U system.

In a first aspect, in order to achieve the above objective, embodiments of the present disclosure provide a method for selecting sidelink resources, which is applied to a first terminal and includes the following operations.

PSFCH resource configuration information is acquired.

A PSFCH transmission resource is determined, where the PSFCH transmission resource is configured for PSFCH transmission, and the PSFCH transmission carries Hybrid Automatic Repeat Request Acknowledgment (HARQ-ACK) information related to PSSCH reception.

In some embodiments, the PSFCH resource configuration information includes PSFCH frequency domain resource indication information, where the PSFCH frequency domain resource indication information includes at least one of the followings: a Resource Block (RB) set indication, first indication information, a first PSFCH resource group number, second indication information, a second PSFCH resource group number, or third indication information.

The RB set indication is configured to indicate an RB set configured with PSFCH resources in a resource pool.

The first indication information is configured to indicate the PSFCH resources for PSFCH transmission and reception in a target RB set, where the target RB set is an RB set containing the PSFCH transmission resource.

The first PSFCH resource group number is configured to indicate the number of PSFCH resource groups in the resource pool.

The second indication information is configured to indicate the PSFCH resources for PSFCH transmission and reception in a target PSFCH resource group, where the target PSFCH resource group is a resource group containing the PSFCH transmission resource.

The second PSFCH resource group number is configured to indicate the number of PSFCH resource groups in the target RB set.

The third indication information is configured to indicate the PSFCH resources for PSFCH transmission and reception in each PSFCH resource group in the target RB set.

In some embodiments, the first indication information includes one or more bitmaps.

In some embodiments, the bitmap is configured to indicate the PSFCH resources in each target RB set, where a leftmost bit of the bitmap corresponds to a first resource with a minimum index in each target RB set, and the first resource is a PRB and/or an IRB.

In some embodiments, the leftmost bit of each bitmap corresponds to a first resource with a minimum index in the RB set corresponding to the bitmap; or, the leftmost bit of each bitmap corresponds to a first resource with a minimum index in the resource pool.

In some embodiments, the second indication information includes one or more bitmaps, where the leftmost bit of each bitmap corresponds to the first resource with the minimum index in the resource pool.

In some embodiments, the operation of determining the PSFCH transmission resource includes the following operations.

A relationship between the PSFCH resources and subchannels and/or PSSCH slots is determined.

A PSFCH candidate resource set is determined.

The PSFCH transmission resource is determined in the PSFCH candidate resource set.

In some embodiments, the operation of determining the relationship between the PSFCH resources and the subchannels and/or the PSSCH slots includes any one of the following operations.

The PSFCH resource allocated to one subchannel in one PSSCH slot is determined according to at least one of a PSFCH resource configuration period, a PSSCH slot index value in a PSSCH period corresponding to a PSFCH, or a subchannel index value in the RB set.

The PSFCH resource allocated to one subchannel is determined according to a subchannel index occupied by a PSSCH, where the subchannel is a subchannel in the PSSCH period corresponding to the PSFCH resource, or the subchannel is a subchannel in one PSSCH slot in the PSSCH period corresponding to the PSFCH resource.

In some embodiments, the operation of determining the PSFCH candidate resource set includes any one of the following operations.

The PSFCH candidate resource set is determined according to a first reference subchannel occupied in a reference RB set corresponding to the PSSCH transmission.

The PSFCH candidate resource set is determined according to a second reference subchannel corresponding to the PSSCH transmission.

In some embodiments, the reference RB set includes any one of the followings:

an RB set with lowest index among all RB sets of corresponding PSSCH transmission;

an RB set with largest index among all RB sets of the corresponding PSSCH transmission; or

all RB sets for the corresponding PSSCH transmission.

In some embodiments, the first reference subchannel includes any one of the followings:

a starting subchannel of resources occupied by the PSSCH transmission in the reference RB set; or

all subchannels of the resources occupied by the PSSCH transmission in the reference RB set.

In some embodiments, the operation of determining the PSFCH transmission resource in the PSFCH candidate resource set includes the following operation.

The PSFCH transmission resource is determined according to at least one of the following parameters:

first identification information, configured to indicate a source Identifier (ID) of Layer 1;

second identification information, where the second identification information is a first value or **an ID** of the first terminal;

PSFCH index information; or

a slot index.

**In** a second aspect, in order to achieve the above objective, the embodiments of the present disclosure provide an apparatus for selecting sidelink resources, which is applied to a first terminal and includes an acquisition module and a determination module.

The acquisition module is configured to acquire PSFCH resource configuration information.

The determination module is configured to determine a PSFCH transmission resource according to the PSFCH resource configuration information, where the PSFCH transmission resource is configured for PSFCH transmission, and the PSFCH transmission carries HARQ-ACK information related to PSSCH reception.

In a third aspect, in order to achieve the above objective, the embodiments of the present disclosure provide a terminal, which includes a transceiver, a memory, a processor, and a computer program stored in the memory and runnable on the processor. The processor implements the method for selecting sidelink resources as described in the first aspect when executing the computer program.

In a fourth aspect, in order to achieve the above objective, the embodiments of the present disclosure provide a readable storage medium, in which a program or an instruction is stored. The program or the instruction is executed by a processor to implement the method for selecting sidelink resources as described in the first aspect.

The above technical solutions of the present disclosure have at least the following beneficial effects.

In the method for selecting sidelink resources in the embodiments of the present disclosure, the first terminal first acquires the PSFCH resource configuration information, and then determines the PSFCH transmission resource for PSFCH transmission, where the PSFCH transmission carries the HARQ-ACK information related to PSSCH reception. In this way, a method for selecting PSFCH resource suitable for SL-U is provided, which fills the gap that there is no related method in the current standard.

**Brief Description of the Drawings**

Fig. 1 is a schematic flowchart of a method for selecting sidelink resources according to some embodiments of the present disclosure.

Fig. 2A is a first schematic diagram of PSFCH resource configuration according to some embodiments of the present disclosure.

Fig. 2B is a second schematic diagram of PSFCH resource configuration according to some embodiments of the present disclosure.

Fig. 2C is a third schematic diagram of PSFCH resource configuration according to some embodiments of the present disclosure.

Fig. 2D is a fourth schematic diagram of PSFCH resource configuration according to some embodiments of the present disclosure.

Fig. 3 is a fifth schematic diagram of PSFCH resource configuration according to some embodiments of the present disclosure.

Fig. 4A is a first schematic diagram of a basic principle of mapping between a PSSCH and a PSFCH according to some embodiments of the present disclosure.

Fig. 4B is a second schematic diagram of a basic principle of mapping between a PSSCH and a PSFCH according to some embodiments of the present disclosure.

Fig. 4C is a third schematic diagram of a basic principle of mapping between a PSSCH and a PSFCH according to some embodiments of the present disclosure.

Fig. 5 is a first schematic diagram of a corresponding relationship between a PSFCH and a subchannel according to some embodiments of the present disclosure.

Fig. 6 is a second schematic diagram of a corresponding relationship between a PSFCH and a subchannel according to some embodiments of the present disclosure.

Fig. 7A is a first schematic diagram of determining a PSFCH candidate resource set according to some embodiments of the present disclosure.

Fig. 7B is a second schematic diagram of determining a PSFCH candidate resource set according to some embodiments of the present disclosure.

Fig. 7C is a third schematic diagram of determining a PSFCH candidate resource set according to some embodiments of the present disclosure.

Fig. 7D is a fourth schematic diagram of determining a PSFCH candidate resource set according to some embodiments of the present disclosure.

Fig. 8 is a first schematic diagram of a resource actually for carrying a PSFCH according to some embodiments of the present disclosure.

Fig. 9 is a second schematic diagram of a resource actually for carrying a PSFCH according to some embodiments of the present disclosure.

Fig. 10 is a schematic structural diagram of an apparatus for selecting sidelink resources according to some embodiments of the present disclosure.

Fig. 11 is a schematic structural diagram of a terminal according to some embodiments of the present disclosure.

**Detailed Description of the Embodiments**

In order to make the technical problems, technical solutions, and advantages of the present disclosure clearer, a detailed description will be made below in conjunction with the drawings and specific embodiments. In the following description, specific details such as specific configurations and components are provided merely to help fully understand the embodiments of the present disclosure. Therefore, those skilled in the art should appreciate that various changes and modifications may be made to the embodiments described herein without departing from the scope and spirit of the present disclosure. In addition, for clarity and brevity, descriptions of well-known functions and constructions are omitted.
It is to be understood that "some embodiments" or "an embodiment" mentioned in the whole specification mean that specific features, structures or characteristics related to the embodiment are included in at least one embodiment of the present disclosure. Therefore, "in some embodiments" or "in an embodiment" appearing at any place of the whole specification does not always refer to the same embodiment. In addition, these specific features, structures or characteristics may be combined in one or more embodiments freely as appropriate.
It is to be understood that, in each embodiment of the present disclosure, a magnitude of a sequence number of each process does not mean an execution sequence and the execution sequence of each process should be determined by its function and an internal logic and should not form any limit to an implementation process of the embodiments of the present disclosure.
In the embodiments provided by the present disclosure, it is to be understood that "B corresponding to A" indicates that B is associated with A, and B may be determined according to A. However, it is also to be understood that determining B according to A does not mean that B is determined only according to A, and B may also be determined according to A and/or other information.
In a case where the embodiments of the present disclosure are described, some concepts used in the following description are first explained.

1. SL-U physical layer structure

As described above, a PSCCH/PSSCH transmission resource includes two structures: an IRB structure and a contiguous PRB structure.
In the IRB structure, the definition of a subchannel is K contiguous IRBs located in one RB set (which may be understood as one channel or 20 MHz). For a Subcarrier Spacing (SCS) of 15 kHz, K may be at least equal to 1 and 2. For an SCS of 30 kHz, K may be at least equal to 1.
The IRB structure refers to two contiguous available PRBs separated by M PRBs. For an index m of the IRB, the PRBs included therein are {m, m+M, m+2M, m+3M, ...}, where $m \in \{0, 1, ..., M-1\}$, that is, one IRB includes multiple PRBs, and an interval between the PRBs is M. In a New Radio on Unlicensed Spectrum (NR-U) system, the IRB structure is respectively defined for the two SCSs of 15 kHz and 30 kHz, as shown in Table 1 below. SL-U follows the design of NR-U for the IRB.

Table 1 IRB structure

| μ | SCS | M value |
|---|-----|---------|
| 0 | 15 kHz | 10 |
| 1 | 30 kHz | 5 |

In the contiguous PRB structure, the definition of the subchannel is the same as that in a standard (such as R16/R17) sidelink in the related art, that is, one subchannel includes multiple contiguous PRBs in the frequency domain. As shown in Table 2 below, detailed reference may be made to parameters related to frequency domain configuration of a resource pool in R16/R17.

Table 2 Parameters related to frequency domain configuration of resource pool

| Parameter name | Function |
|---|---|
| sl-SubchannelSize-r16 | The minimum granularity in the frequency domain during resource sensing, which may be understood as the size of the subchannel or the number of PRBs contained in the subchannel, and may be {10, 12, 15, 20, 25, 50, 75, 100} |
| sl-StartRB-Subchannel-r16 | An index of a starting PRB of the subchannel with a minimum index in the resource pool |
| sl-NumSubchannel-r16 | Indicates the number of subchannels in the resource pool, and only supports contiguous PRBs |
| sl-RB-Number-r16 | Indicates the total number of PRBs in the resource pool, Remaining RB cannot be used.<br>Remaining RB refers to the PRBs remaining in the resource pool other than the subchannel |

2. Method for configuring PSFCH resource

There are two configurations related to the PSFCH resource configuration: sl-PSFCH-Period and sl-PSFCH-RB-Set.

The sl-PSFCH-Period indicates a period of PSFCH resources in units of logical slots (i.e., slots in the resource pool). If the value is 0, it indicates that there is no PSFCH resource and HARQ feedback is not supported in the resource pool.

The sl-PSFCH-RB-Set supports a set of PRBs actually configured for PSFCH transmission and reception, and is indicated by a bitmap, where a leftmost bit of the bitmap is configured to indicate the PRB with the minimum index in the resource pool. "0" in the bitmap is configured to indicate that the corresponding PRB cannot be configured for PSFCH transmission and reception, and "1" is configured to indicate that the corresponding PRB may be configured for PSFCH transmission and reception.

A method and apparatus for selecting sidelink resources, and a terminal in the embodiments of the present disclosure will be described in detail below in conjunction with specific examples.

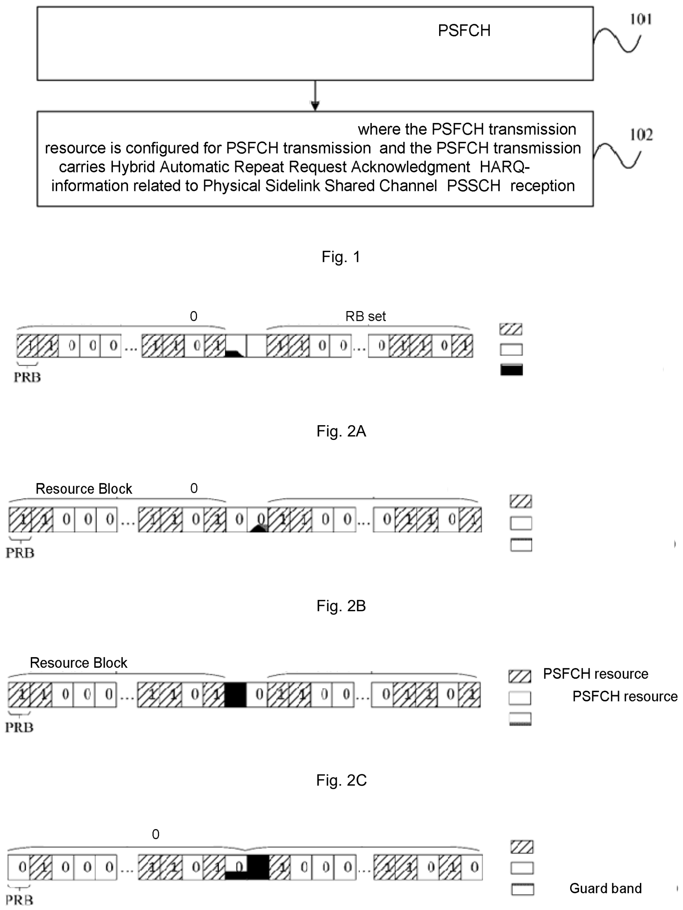

As shown in Fig. 1, the embodiments of the present disclosure provide a method for selecting sidelink resources, which is applied to a first terminal and includes the following operations.

At S101, PSFCH resource configuration information is acquired.

At S102, a PSFCH transmission resource is determined, where the PSFCH transmission resource is configured for PSFCH transmission, and the PSFCH transmission carries HARQ-ACK information related to PSSCH reception. In this step, the PSFCH transmission resource is specifically determined according to the PSFCH resource configuration information acquired in S101.

Here, it is to be noted that PSSCH-related structures (including the definition of the subchannel, an indexing manner of the subchannel, a corresponding relationship between the subchannel and the RB set, and the like) and a resource selection process are not limited in the embodiments of the present disclosure, that is, the relevant content may be a mechanism in the related art, or may be a mechanism for enhancing and improving the PSSCH-related structures and/or the resource selection process.

In some embodiments, it is to be noted that, in practical applications, resources for carrying a PSFCH may have at least one of the following structures:

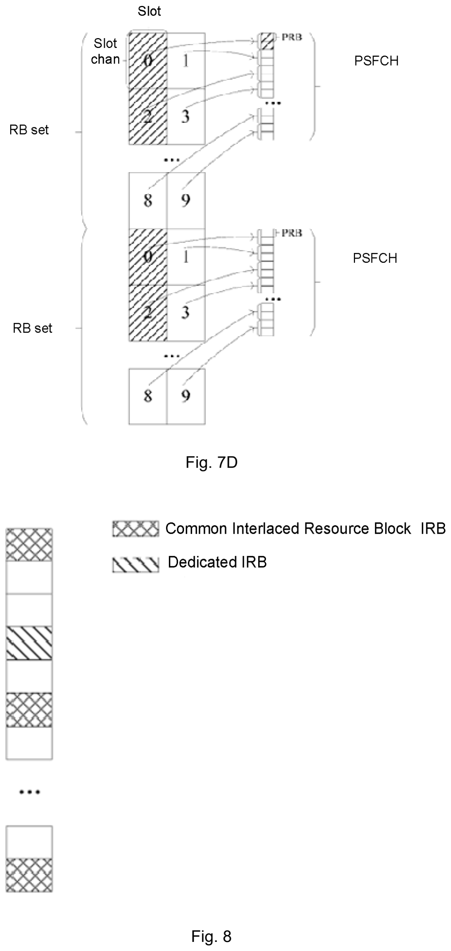

(1) One resource for carrying the PSFCH includes K1 common IRBs and K2 dedicated PRBs, that is, multiple PSFCH transmissions in one slot all occupy the same common IRB, but occupy different dedicated PRBs. That is, as shown in Fig. 8, the resources for carrying the PSFCH include a first PSFCH resource (i.e., common IRB) and a second PSFCH resource (dedicated PRB).

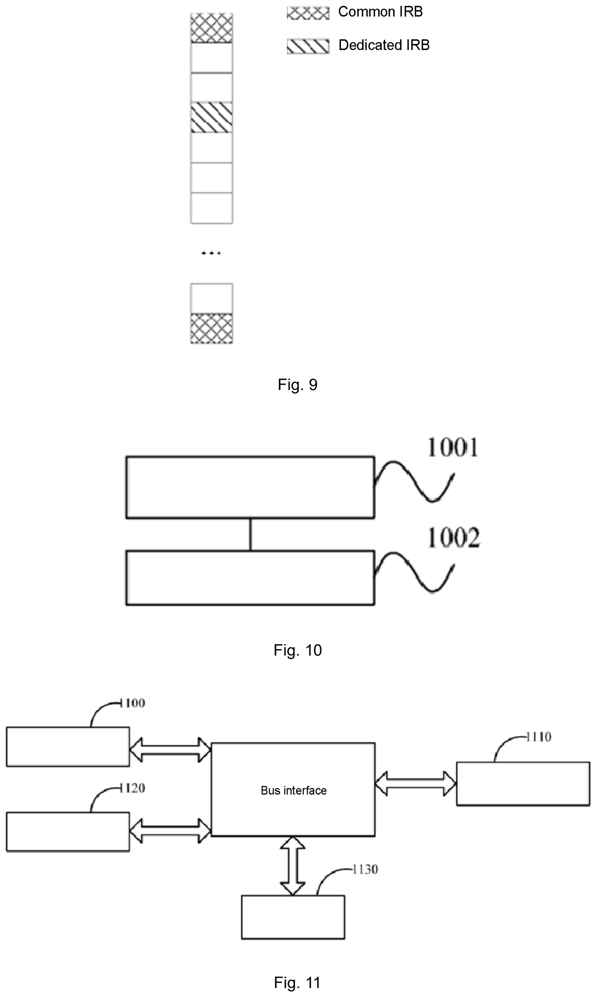

(2) One resource for carrying the PSFCH includes K3 common IRBs and K4 dedicated PRBs, that is, multiple PSFCH transmissions in one slot all occupy the same common PRB, but occupy different dedicated PRBs. That is, as shown in Fig. 9, the resources actually for carrying the PSFCH includes a third PSFCH resource (common PRB) and a fourth PSFCH resource (dedicated PRB).

(3) One resource for carrying the PSFCH occupies one IRB. That is, each resource for carrying the PSFCH includes a fifth PSFCH resource.

The PSFCH transmission resource (PSFCH transmission resource determined in the above S102) mentioned in the embodiments of the present disclosure refers to the dedicated PSFCH resource (dedicated PRB) in the above various situations, and may specifically be the second PSFCH resource in (1), or, the fourth PSFCH resource in (2), or, the fifth PSFCH resource in (3). Of course, the resources actually for carrying the PSFCH may also be other structures. In this case, the PSFCH transmission resource mentioned in the embodiments of the present disclosure is still the dedicated PSFCH resource.

In some embodiments, the configuration method of the common resource (including but not limited to the first PSFCH resource in (1) or the third PSFCH resource in (2)) mentioned in the embodiments of the present disclosure may adopt a resource indexing manner or a bitmap indication manner, for example, configuring or pre-configuring an IRB index for the common IRB in each RB set or a target RB set in the resource pool, or configuring or pre-configuring a bitmap for indicating which PRBs in the resource pool are configured for the common PRB. One or more bitmaps may be provided. In a case where there are multiple bitmaps, the bitmap is configured to indicate the common PRB in the corresponding RB set.

A basic principle of mapping between the PSSCH and the PSFCH satisfies at least one of the followings: One or more PSFCH transmissions corresponding to the received PSSCH transmission are located in the same RB set or channel.

One or more PSFCH transmissions corresponding to the received PSSCH transmission may be located in different RB sets or channels.

One or more PSFCH transmissions corresponding to the received PSSCH transmission are located in different slots.

One or more PSFCH transmissions corresponding to the received PSSCH transmission are located in the same slot.

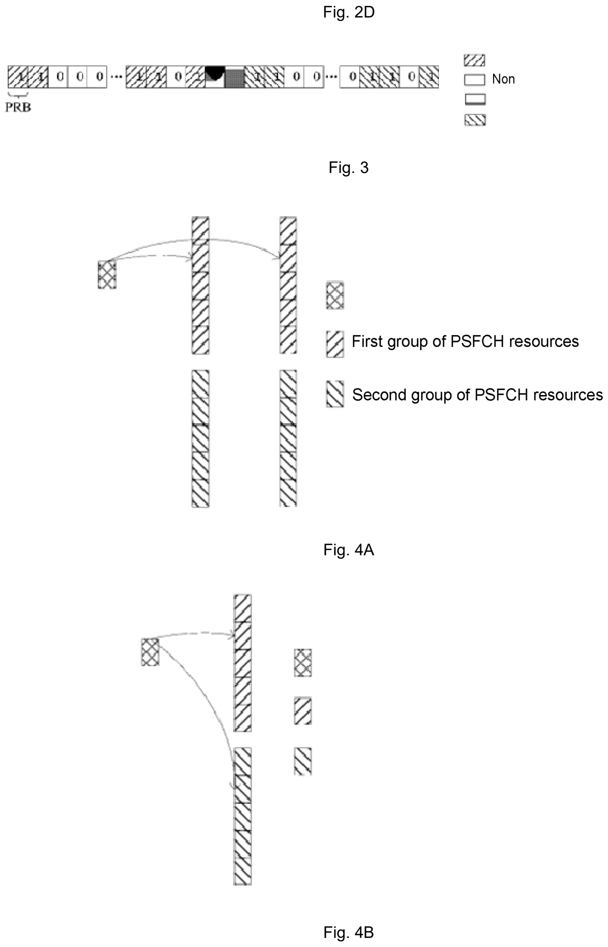

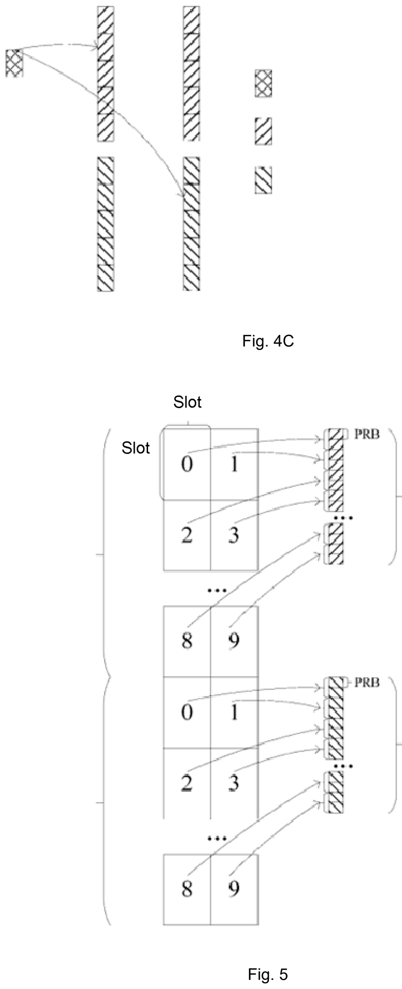

In some embodiments, as shown in Fig. 4A, two PSFCH transmissions corresponding to the received PSSCH are located in different slots, but use the same frequency domain resource (same frequency domain resource and Cyclic Shift (CS)). As shown in Fig. 4B, two PSFCH transmissions corresponding to the received PSSCH are located in the same slot, but use different frequency domain resources (different frequency domain resources or different CSs). As shown in Fig. 4C, two PSFCH transmissions corresponding to the received PSSCH are located in different slots and use different frequency domain resources (different frequency domain resources or different CSs).

In the method for selecting sidelink resources in the embodiments of the present disclosure, the first terminal first acquires the PSFCH resource configuration information, and then determines the PSFCH transmission resource for PSFCH transmission, where the PSFCH transmission carries the HARQ-ACK information related to PSSCH reception. In this way, a method for selecting PSFCH resources suitable for SL-U is provided, which fills the gap that there is no related method in the current standard.

In some embodiments, the PSFCH resource configuration information includes PSFCH frequency domain resource indication information, where the PSFCH frequency domain resource indication information includes at least one of the followings: an RB set indication, first indication information, a first PSFCH resource group number, second indication information, a second PSFCH resource group number, third indication information, or fourth indication information.

The RB set indication is configured to indicate the RB set configured with the PSFCH resources in the resource pool. Here, the RB set indication may also be called a channel indication. When called the channel indication, the RB set indication is configured to indicate the channel configured with the PSFCH resources in the resource pool, where the indication manner of the RB set indication may be a bitmap or a Resource Indicator Value (RIV).

The first indication information is configured to indicate the PSFCH resources for PSFCH transmission and reception in a target RB set/channel, where the target RB set/channel is an RB set/channel containing the PSFCH transmission resource.

The first PSFCH resource group number is configured to indicate the number of PSFCH resource groups in the resource pool, that is, the PSFCH resources in the resource pool are divided into one or more groups.

The second indication information is configured to indicate the PSFCH resources for PSFCH transmission and reception in a target PSFCH resource group, where the target PSFCH resource group is a resource group containing the PSFCH transmission resource.

The second PSFCH resource group number is configured to indicate the number of PSFCH resource groups in the target RB set, that is, the PSFCH resources are allocated into one or more groups in each RB set, and the number of PSFCH resource groups in different RB sets may be the same or different. The target RB set is an RB set/channel containing the PSFCH transmission resource.

The third indication information is configured to indicate the PSFCH resources for PSFCH transmission and reception in each PSFCH resource group in the target RB set.

The fourth indication information is configured to indicate the PSFCH resources for PSFCH transmission and reception or to indicate the PSFCH resources for PSFCH transmission and reception in the resource pool.

Here, it is to be noted that the above target RB set may also be any RB set in the resource pool, and in this case, it may be understood that each RB set in the resource pool is configured with the PSFCH resources. In some embodiments of the present disclosure, the granularity of the PSFCH resources may be the PRB and/or the IRB.

An implementation process of the present optional implementation will be illustrated below.

Example 1: In a case where the PSFCH resources are configured based on the RB set/channel, the PSFCH frequency domain resource indication information includes the RB set/channel indication and/or the first indication information.

Example 2: In a case where the PSFCH resources are allocated by groups, the PSFCH frequency domain resource indication information includes the first PSFCH resource group number and/or the second indication information. From the perspective of the frequency domain, the first PSFCH resource corresponding to the PSSCH is located in the first group of PSFCH resources, the second PSFCH resource corresponding to the PSSCH is located in the second group of PSFCH resources, and so on.

Example 3: The PSFCH frequency domain resource indication information includes at least one of the RB set indication, the second PSFCH resource group number, or the third indication information.

In some embodiments, the first indication information includes one or more bitmaps.

In some embodiments, the bitmap is configured to indicate the PSFCH resources in each target RB set, where the leftmost bit of the bitmap corresponds to a first resource with a minimum index in each target RB set, or corresponds to a first resource with a minimum index other than the common IRB or the common PRB mentioned above, and the first resource is the PRB and/or the IRB.

Here, it is to be noted that the specific implementation may be for a case where the first indication information includes one bitmap.

That is, in a case where the first indication information includes only one bitmap, the bitmap is configured to indicate the PSFCH resources in each RB set/subchannel/20 MHz, that is, different RB sets/channels/each 20 MHz may adopt the same bitmap, that is, the lowest bit on the left of the bitmap corresponds to the PRB/IRB with the lowest index in each RB set/each channel/each 20 MHz, or corresponds to the first resource with the minimum index in each RB set/each channel/each 20 MHz other than the common IRB or the common PRB mentioned above.

For example, the resource pool includes two RB sets/channels, with a total of 100 PRBs, of which the 49th and 50th PRBs are guard bands (indexes start from 0, that is, the PRB with index 0 is the first PRB in the resource pool).

Then, as shown in Fig. 2A, the PSFCH resources are configured for each RB set in the resource pool, and the bitmap for configuring the PSFCH resources is 11000...1101 (the length of the bitmap is 49).

1) The length of the bitmap is the number of PRBs in each RB set in the resource pool, or the minimum/maximum number of PRBs in the RB set. Each RB set in the resource pool determines the PSFCH resources in the corresponding RB set based on the same bitmap. The lowest bit (leftmost bit) of the bitmap corresponds to the first PRB (excluding the guard band) in each RB set.

2) If the PSFCH frequency domain resource indication information further includes RB set indication information, it indicates that only these indicated RB sets have the PSFCH resources, and then each indicated RB set determines the PSFCH resources in the corresponding RB set based on the same bitmap. The lowest bit (leftmost bit) of the bitmap corresponds to the first PRB (excluding the guard band) in each designated RB set (target RB set).

In some embodiments, as shown in Fig. 2D, the PSFCH resources are configured for each channel/20 MHz in the resource pool, and the bitmaps for configuring the PSFCH resources are the same (01000...11010), that is, the length of each bitmap and each bit are the same (all 50). The lowest bit (leftmost bit) of the bitmap corresponds to the first PRB in each channel/20 MHz.

In some embodiments, in a case where the first indication information includes only one bitmap, the bitmap is configured to indicate the PSFCH resources in the resource pool (similar to the mechanism in the related art), but during configuration, it is necessary to add a limiting condition, and the final effect is to ensure that each RB set has the PSFCH resources. The lowest bit on the left of the bitmap corresponds to the PRB/IRB with the minimum index in the resource pool, or corresponds to the PRB/IRB with the minimum index in the resource pool other than the common IRB or the common PRB mentioned above.

For example, the resource pool includes two RB sets/channels, with a total of 100 PRBs, of which the 49th and 50th PRBs are guard bands (indexes start from 0, that is, the PRB with index 0 is the first PRB in the resource pool). As shown in Fig. 2B, the bitmap for configuring the PSFCH resources is 11000...11010011000...1101, and the length of the bitmap is 100. In this indication manner, the PSFCH resource configuration of the entire resource pool is indicated by a group of bitmaps, but during configuration, it is necessary to ensure that each RB set has the PSFCH resources, and the number of PSFCH resources in each RB set may be the same or different. The lowest bit on the left of the bitmap corresponds to the PRB/IRB with the minimum index in the resource pool (the guard band PRB shown in Fig. 2B is also a non-PSFCH resource), or corresponds to the PRB/IRB with the minimum index in the resource pool other than the common IRB or common PRB mentioned above. In this case, the RB set indication information is no longer needed.

In some embodiments, the leftmost bit of each bitmap corresponds to the first resource with the minimum index in the RB set corresponding to the bitmap, or corresponds to the first resource with the minimum index in the RB set corresponding to the bitmap other than the common IRB or the common PRB mentioned above. Or, the leftmost bit of each bitmap corresponds to the first resource with the minimum index in the resource pool, or corresponds to the first resource with the minimum index in the resource pool other than the common IRB or the common PRB mentioned above.

Here, it is to be noted that, firstly, this specific implementation may be for a case where the first indication information includes multiple bitmaps; and secondly, each bit in the bitmap is configured to indicate whether the corresponding resource is a PSFCH resource for transmission and reception. For example, in a case where the bit is "0", it indicates that the corresponding resource cannot be configured for transmission and reception of the PSFCH; and in a case where the bit is "1", it indicates that the corresponding resource may be configured for transmission and reception of the PSFCH.

That is, in a case where the first indication information includes only multiple bitmaps, different RB sets/channels/each 20 MHz may adopt different bitmaps, and the lowest bit on the left of each bitmap corresponds to the PRB/IRB with the lowest index in the RB set/channel/20 MHz corresponding to each bitmap or corresponds to the PRB/IRB with the minimum index in the RB set/channel/20MHz corresponding to each bitmap other than the common IRB or the common PRB mentioned above. Or, different RB sets/channels/20 MHz may adopt different bitmaps, and the lowest bit on the left of each bitmap is configured to indicate the PRB/IRB with the minimum index in the resource pool or corresponds to the PRB/IRB with the minimum index in the resource pool other than the common IRB or the common PRB mentioned above.

For example, the resource pool includes two RB sets/channels, with a total of 100 PRBs, of which the 49th and 50th PRBs are guard bands (indexes start from 0, that is, the PRB with index 0 is the first PRB in the resource pool). The PSFCH resources are configured for each RB set/channel/20 MHz in the resource pool. As shown in Fig. 2C, the bitmaps for configuring the PSFCH resources are 11000...1101000000...00000 and 00000...0000001100...01101. The lowest bit on the left of the bitmap is configured to indicate the PRB with the minimum index in the resource pool. Based on these two configured bitmaps, it may be determined that each RB set in the resource pool is configured with the PSFCH resources.

In some embodiments, the second indication information includes one or more bitmaps, where the leftmost bit of the bitmap corresponds to the first resource with the minimum index in the resource pool, or corresponds to the first resource with the minimum index in the resource pool other than the common IRB or the common PRB mentioned above.

Here, it is to be noted that in a case where the second indication information includes multiple bitmaps, the number of bitmaps corresponds to the number of first PSFCH resource groups.

For example, assuming that one PSSCH resource corresponds to two PSFCH transmissions, during PSFCH resource configuration, the PSFCH resources are divided into two groups, that is, different PSFCH resources are determined by two groups of bitmaps. As shown in Fig. 3, the two groups of bitmaps are 11000...1101000000...00000 and 00000...0000001100...01101, respectively.

In some embodiments, S102 of determining the PSFCH transmission resource includes the following operations.

(1) A relationship between the PSFCH resources and the subchannels and/or the PSSCH slots is determined, where the PSSCH slot is associated with a slot in which the PSFCH is configured, that is, the PSFCH resources for PSFCH transmission corresponding to a PSSCH received in the PSSCH slot belong to the PSFCH resources. In this step, the PSFCH resources specifically refer to the PSFCH resources in the target RB set, or, the PSFCH resources in the target PSFCH resource group. For example, this step includes: determining the relationship between the PSFCH resources and the subchannels, or, determining the relationship between the PSFCH resources and the subchannels and the PSSCH slots.

(2) A PSFCH candidate resource set is determined. In this step, the PSFCH candidate resource set is specifically determined according to the relationship determined in the step (1).

(3) The PSFCH transmission resource is determined in the PSFCH candidate resource set.

In some embodiments, the operation of determining the relationship between the PSFCH resources and the subchannels and/or the PSSCH slots includes any one of the following operations.

1) The PSFCH resource allocated to one subchannel in one PSSCH slot is determined according to at least one of a PSFCH resource configuration period, a PSSCH slot index value in a PSSCH period corresponding to the PSFCH, or a subchannel index value in the RB set.

Here, it is to be noted that this step is mainly for a case where the actual PSFCH transmission resources include the dedicated PRB mentioned above. In some embodiments, in this step, the PSFCH resource allocated to one subchannel in the PSSCH slot may be expressed as the following formula:

$$\left[\left(i + j \cdot N_{PSSCH}^{PSFCH}\right) \cdot M_{subch,slot}^{PSFCH}, \left(i + 1 + j \cdot N_{PSSCH}^{PSFCH}\right) \cdot M_{subch,slot}^{PSFCH} - 1\right]$$

Where $M_{subch,slot}^{PSFCH}$ indicates the number of PRBs of a candidate PSFCH allocated to a target single subchannel, $M_{subch,slot}^{PSFCH} = M_{PRB}^{PSFCH} / (N_{subch} * N_{PSSCH}^{PSFCH})$ ; $N_{subch}$ indicates the number of subchannels in one RB set or the total number of subchannels in the resource pool; $M_{PRB}^{PSFCH}$ indicates the number of PRBs in the PSFCH in one RB set or one PSFCH resource group or the resource pool; $N_{PSSCH}^{PSFCH}$ indicates the PSFCH resource configuration period; i indicates the PSSCH slot index value in the PSSCH period corresponding to the PSFCH,

$0 \le i < N_{PSSCH}^{PSFCH}$ ; and j indicates the index value of the subchannel in one RB set or the resource pool, $0 \le j < N_{subch}$.

2) The PSFCH resource allocated to one subchannel in one PSCCH slot in the PSSCH period corresponding to the PSFCH resource is determined according to a subchannel index occupied by the PSSCH, or the PSFCH resource allocated to one subchannel in the PSSCH period corresponding to the PSFCH resource is determined.

Here, it is to be noted that this step is mainly for the PSFCH of the IRB structure. In some embodiments, the subchannel and the corresponding PSFCH resource thereof are located in the same RB set, and the IRB corresponding to the subchannel and the IRB corresponding to the PSFCH resource have the same index, that is, the PSFCH resource occupies one IRB in a single RB set.

The present specific implementation will be described below in conjunction with specific examples.

As shown in Fig. 5, the PSFCH period is 2 slots, that is, the PSFCH resources in one slot are associated with the PSCCH/PSSCH transmissions in two slots, that is, feedback information corresponding to the PSSCH transmitted in these two slots is transmitted on the PSFCH resources shown in Fig. 5. The PSFCH resources configured in each RB set are 20 PRBs, so that the number of candidate PSFCH resources corresponding to each subchannel in each RB set is 20/(2*5)=2 PRBs, and a time domain priority mapping method is adopted.

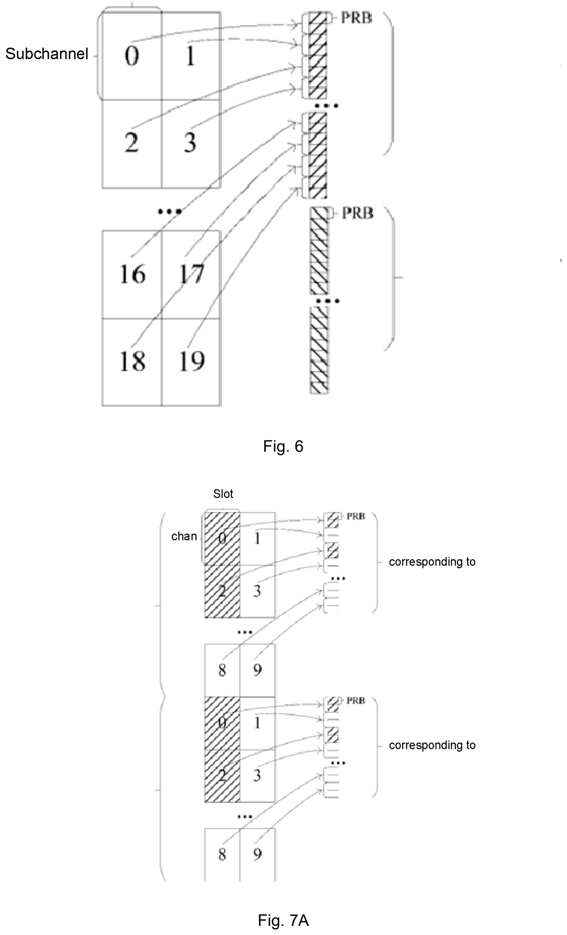

Also as shown in Fig. 6, the PSFCH period is 2 slots, that is, the PSFCH resources in one slot are associated with the PSCCH/PSSCH transmissions in two slots, that is, the feedback information corresponding to the PSSCH transmitted in these two slots is transmitted on the PSFCH resources as shown in Fig. 6. The PSFCH resources in one slot are divided into two groups, and the number of PRBs in each group is 40, so that the number of candidate PSFCH resources corresponding to each subchannel is 40/(2*10)=2 PRBs, and the time domain priority mapping method is adopted. The first PSFCH transmission resource corresponding to the PSSCH belongs to a first PSFCH resource group, the second PSFCH transmission resource corresponding to the PSSCH belongs to a second PSFCH resource group, and the two PSFCH transmission resources corresponding to the PSSCH are located in different slots (Fig. 6 only shows the corresponding relationship between the PSSCH and the first PSFCH resource group).

In some embodiments, the operation of determining the PSFCH candidate resource set includes any one of the following operations.

A) The PSFCH candidate resource set is determined according to a first reference subchannel occupied in a reference RB set corresponding to the PSSCH transmission.

In some embodiments, the reference RB set includes any one of the followings:

an RB set with a lowest index among all RB sets of corresponding PSSCH transmission;

an RB set with largest index among all RB sets of the corresponding PSSCH transmission; or

all RB sets for the corresponding PSSCH transmission.

In some embodiments, the first reference subchannel includes any one of the followings:

a starting subchannel of resources occupied by the PSSCH transmission in the reference RB set; or

all subchannels of the resources occupied by PSSCH transmission in the reference RB set.

This step will be described below in conjunction with specific examples.

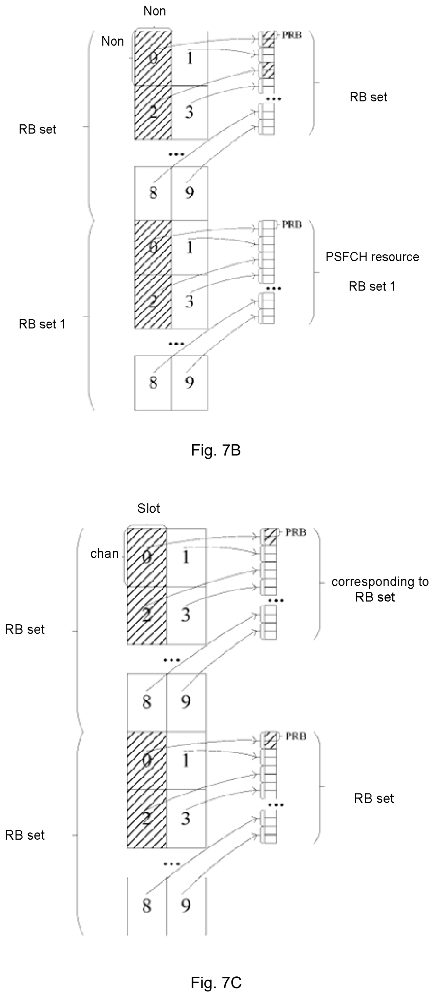

As shown in Fig. 7A, in this step, the PSFCH candidate resource set may specifically be determined according to all subchannels in all RB sets occupied by the PSSCH. As shown in Fig. 7B, in this step, the PSFCH candidate resource set may specifically be determined according to all subchannels in the starting RB set occupied by the PSSCH. As shown in Fig. 7C, in this step, the PSFCH candidate resource set may specifically be determined according to the starting subchannel in all RB sets occupied by the PSSCH. As shown in Fig. 7D, in this step, the PSFCH candidate resource set may specifically be determined according to the starting subchannel in the starting RB set occupied by the PSSCH.

B) The PSFCH candidate resource set is determined according to a second reference subchannel corresponding to the PSSCH transmission. Here, the second reference subchannel may be the starting subchannel of the resources occupied by the PSSCH transmission, or may be all subchannels of the resources occupied by the PSSCH transmission.

In some embodiments, the operation of determining the PSFCH transmission resource in the PSFCH candidate resource set includes the following operation.

The PSFCH transmission resource is determined according to at least one of the following parameters: first identification information, second identification information, PSFCH index information, or a slot index.

The first identification information is configured to indicate a source ID of Layer 1.

The second identification information is a first value or an ID of the first terminal. For example, in a case where it is detected that the cast type indicated in Sidelilnk Control Information (SCI) format 2-A is multicast (the corresponding indication field is "01"), the second identification information is an ID of a User Equipment (UE)/terminal receiving the PSSCH; otherwise the second identification information is 0.

The PSFCH index information indicates the ordinal position of the PSFCH to which the PSSCH corresponds.

The slot index indicates the slot index of the PSSCH resources in the PSSCH period corresponding to the PSFCH.

In some embodiments, the PSFCH transmission resource may be determined in any one of the following manners.

(1) The index corresponding to the PSFCH resource is $(P_{\text{ID}} + M_{\text{ID}})\ mod\ R_{\text{PRB, CS}}^{\text{PSFCH}}$.

(2) The index corresponding to the PSFCH resource is $(P_{ID} + M_{ID} + i) mod R_{PRB,CS}^{PSFCH}$.

(3) The index corresponding to the PSFCH resource is $(P_{ID} + M_{ID} + t) mod R_{PRB,CS}^{PSFCH}$.

(4) The index corresponding to the PSFCH resource is $(P_{ID} + M_{ID} + +i + t) mod R_{PRB,CSFCH}$.

Where $P_{\text{ID}}$ indicates the source ID of Layer 1, that is, the ID of the terminal that transmits the PSSCH; $M_{\text{ID}}$ indicates the second identification information; i indicates the PSFCH index information, that is, indicates that the determined PSFCH transmission resource is the i-th PSFCH resource corresponding to the PSSCH; t indicates the slot index value of the PSSCH in the PSSCH period corresponding to the shown PSFCH; and $R_{\text{PRB, CS}}^{\text{PSFCH}}$ indicates the PSFCH candidate resource set allocated for PSSCH transmission.

In some embodiments, it is to be noted that one PSSCH transmission may correspond to multiple PSFCH transmissions.

The method in the embodiments of the present disclosure is mainly configured to determine the resources of the first PSFCH transmission corresponding to the PSSCH transmission, but at the same time, the method may also be configured to determine the resources of the non-first PSFCH transmission corresponding to the PSSCH transmission.

In some embodiments, the method in the embodiments of the present disclosure is mainly configured to determine the resources of the first PSFCH transmission corresponding to the PSSCH; and the resources of the non-first PSFCH transmission corresponding to the PSSCH are the same as the resources of the corresponding first PSFCH transmission.

In the method for selecting sidelink resources in the embodiments of the present disclosure, the relationship between the PSFCH resources and the subchannels and/or the PSSCH slots is innovatively determined based on the configured PSFCH resource configuration information, the PSFCH candidate resource set is determined based on the relationship, and the PSFCH transmission resource is determined in the PSFCH candidate resource set. In this way, the PSFCH transmission resource selection method is provided for the new structure of the SL-U system, which fills the gap in the standards in the related art, alleviates the problem of PSFCH transmission failure due to Listen Before Talk (LBT) failure, and may more effectively maintain channel occupancy and avoid preemption by other systems.

Here, it is to be noted that all subchannels in the drawings of the embodiments of the present disclosure are only schematic, and do not necessarily mean that the subchannels are defined as the contiguous PRBs, but may also be subchannels determined based on the IRB structure, that is, one subchannel corresponds to N contiguous IRBs in one RB set.

As shown in Fig. 10, the embodiments of the present disclosure further provide an apparatus for selecting sidelink resources, which is applied to a first terminal and includes an acquisition module 1001 and a determination module 1002.

The acquisition module 1001 is configured to acquire PSFCH resource configuration information.

The determination module 1002 is configured to determine a PSFCH transmission resource according to the PSFCH resource configuration information, where the PSFCH transmission resource is configured for PSFCH transmission, and the PSFCH transmission carries HARQ-ACK information related to PSSCH reception.

In some embodiments, the PSFCH resource configuration information includes PSFCH frequency domain resource indication information, where the PSFCH frequency domain resource indication information includes at least one of the followings: an RB set indication, first indication information, a first PSFCH resource group number, second indication information, a second PSFCH resource group number, or third indication information.

The RB set indication is configured to indicate an RB set configured with PSFCH resources in a resource pool.

The first indication information is configured to indicate the PSFCH resources for PSFCH transmission and reception in a target RB set, where the target RB set is an RB set containing the PSFCH transmission resource.

The first PSFCH resource group number is configured to indicate the number of PSFCH resource groups in the resource pool.

The second indication information is configured to indicate the PSFCH resources for PSFCH transmission and reception in a target PSFCH resource group, where the target PSFCH resource group is a resource group containing the PSFCH transmission resource.

The second PSFCH resource group number is configured to indicate the number of PSFCH resource groups in the target RB set.

The third indication information is configured to indicate the PSFCH resources for PSFCH transmission and reception in each PSFCH resource group in the target RB set.

In some embodiments, the first indication information includes one or more bitmaps.

In some embodiments, the bitmap is configured to indicate the PSFCH resources in each target RB set, where a leftmost bit of the bitmap corresponds to a first resource with a minimum index in each target RB set, and the first resource is a PRB and/or an IRB.

In some embodiments, the leftmost bit of each bitmap corresponds to a first resource with a minimum index in the RB set corresponding to the bitmap; or, the leftmost bit of each bitmap corresponds to a first resource with a minimum index in the resource pool.

In some embodiments, the second indication information includes one or more bitmaps, where the leftmost bit of each bitmap corresponds to the first resource with the minimum index in the resource pool.

In some embodiments, the determination module 1002 includes: a first determination sub-module, a second determination sub-module, and a third determination sub-module.

The first determination sub-module is configured to determine a relationship between the PSFCH resources and subchannels and/or PSSCH slots.

The second determination sub-module is configured to determine a PSFCH candidate resource set.

The third determination sub-module is configured to determine the PSFCH transmission resource in the PSFCH candidate resource set.

In some embodiments, the first determination sub-module includes any one of the followings: a first determination unit or a second determination unit.

The first determination unit is configured to determine the PSFCH resource allocated to one subchannel in one PSSCH slot according to at least one of a PSFCH resource configuration period, a PSSCH slot index value in a PSSCH period corresponding to a PSFCH, or a subchannel index value in an RB set.

The second determination unit is configured to determine the PSFCH resource allocated to one subchannel according to a subchannel index occupied by a PSSCH, where the subchannel is a subchannel in the PSSCH period corresponding to the PSFCH resource, or the subchannel is a subchannel in one PSSCH slot in the PSSCH period corresponding to the PSFCH resource.

In some embodiments, the second determination sub-module includes any one of the followings: a third determination unit or a fourth determination unit.

The third determination unit is configured to determine the PSFCH candidate resource set according to a first reference subchannel occupied in a reference RB set corresponding to the PSSCH transmission.

The fourth determination unit is configured to determine the PSFCH candidate resource set according to a second reference subchannel corresponding to the PSSCH transmission.

In some embodiments, the reference RB set includes any one of the followings:

an RB set with lowest index among all RB sets of corresponding PSSCH transmission;

an RB set with largest index among all RB sets of the corresponding PSSCH transmission; or

all RB sets for the corresponding to the PSSCH transmission.

In some embodiments, the first reference subchannel includes any one of the followings:

a starting subchannel of resources occupied by the PSSCH transmission in the reference RB set; or

all subchannels of the resources occupied by the PSSCH transmission in the reference RB set.

In some embodiments, the third determination sub-module is specifically configured to: determine the PSFCH transmission resource according to at least one of the following parameters:

first identification information, configured to indicate a source ID of Layer 1;

second identification information, where the second identification information is a first value or an ID of the first terminal;

PSFCH index information; or

a slot index.

It is to be noted that the above apparatus for selecting sidelink resources provided in the embodiments of the present disclosure can implement all the method steps implemented in the above embodiments of the method for selecting sidelink resources, and can achieve the same technical effect. The parts and beneficial effects that are the same as those in the method embodiments will not be specifically elaborated herein.

As shown in Fig. 11, the embodiments of the present disclosure further provide a terminal, which includes a transceiver 3, a memory 1120, a processor 1100, and a computer program stored in the memory 1120 and runnable on the processor 1100. The processor 1100 implements each process of the method for selecting sidelink resources as described above when executing the computer program, and can achieve the same technical effect. To avoid repetition, details are not described herein again.

The transceiver 1110 is configured to receive and send data under the control of the processor 1100.

In Fig. 11, the bus architecture may include any number of interconnected buses and bridges, specifically one or more processors represented by the processor 1100 and various circuits of a memory represented by the memory 1120 are linked together. The bus architecture may also link various other circuits such as peripherals, regulators, and power management circuits together, which are all well known in the art and are therefore not further described herein. The bus interface provides an interface. The transceiver 1110 may be multiple components, namely, including a transmitter and a receiver, providing a unit for communicating with various other apparatuses on a transmission medium. For different terminals, the user interface 1130 may also be an interface capable of externally and internally connecting required devices, and the connected devices include, but are not limited to, a keypad, a display, a speaker, a microphone, a joystick, and the like

The processor 1100 is responsible for managing the bus architecture and general processing, and the memory 1120 may store the data used by the processor 1100 when performing operations.

Those skilled in the art may understand that all or part of the steps of the above embodiments may be implemented by hardware or related hardware instructed through a computer program, and the computer program includes instructions for executing part or all of the steps of the above method; and the computer program may be stored in a readable storage medium, and the storage medium may be any form of storage medium.

The embodiments of the present disclosure further provide a readable storage medium, in which a program stored. The program is executed by a processor to implement each process of the sidelink resource selection method embodiment as described above and can achieve the same technical effect. To avoid repetition, details are not described herein again. The readable storage medium may a Read-Only Memory (ROM), a Random Access Memory (RAM), a magnetic disk, a compact disc, and the like

Furthermore, it is to be noted that in the apparatus and method of the present disclosure, it is apparent that components or steps may be disassembled and/or recombined. These decompositions and/or recombinations should be regarded as equivalent solutions of the present disclosure. Moreover, the steps of performing the above series of processing may naturally be performed in the order of description or in chronological order, but they do not necessarily need to be performed in chronological order, and some steps may be performed in parallel or independently of each other. It can be understood by those of ordinary skill in the art that all or any of the steps or components of the method and apparatus of the present disclosure can be implemented in any computing apparatus (including a processor, a storage medium, and the like) or a network of computing apparatuses, in hardware, firmware, software, or a combination thereof,

# EP 4 694 457 A1

as can be achieved by those of ordinary skill in the art using their basic programming skills after reading the description of the present disclosure.

Therefore, the objective of the present disclosure may also be achieved by running a program or a group of programs on any computing apparatus. The computing apparatus may be a well-known general purpose apparatus. Therefore, the objective of the present disclosure may also be achieved by simply providing a program product containing a program code that implements the method or apparatus. That is, such a program product also constitutes the present disclosure, and the storage medium storing such a program product may also constitute the present disclosure. It is apparent that the storage medium may be any well-known storage medium or any storage medium developed in the future.

Finally, it is to be noted that relational terms such as first, second, and the like herein are adopted only to distinguish one entity or operation from another entity or operation and not always to require or imply existence of any such practical relationship or sequence between the entities or operations. Furthermore, terms "include" and "contain" or any other variant thereof is intended to cover nonexclusive inclusions herein, so that a process, method, object or terminal device including a series of elements not only includes those elements but also includes other elements which are not clearly listed or further includes elements intrinsic to the process, the method, the object or the device. Under the condition of no more limitations, an element defined by the statement "including a/an......" does not exclude existence of the same other elements in a process, method, object or device including the element.

The above description is optional implementations of the present disclosure, and it is to be noted that those of ordinary skill in the art may also make several improvements and refinements without departing from the principle of the present disclosure, and it should be considered that these improvements and refinements shall all fall within the scope of protection of the present disclosure.

## Claims

1. A method for selecting sidelink resources, which is applied to a first terminal, comprising:

   acquiring Physical Sidelink Feedback Channel (PSFCH) resource configuration information; and
   determining a PSFCH transmission resource, wherein the PSFCH transmission resource is configured for PSFCH transmission, and the PSFCH transmission carries Hybrid Automatic Repeat Request Acknowledgment (HARQ-ACK) information related to Physical Sidelink Shared Channel (PSSCH) reception.

2. The method as claimed in claim 1, wherein the PSFCH resource configuration information comprises PSFCH frequency domain resource indication information, wherein the PSFCH frequency domain resource indication information comprises at least one of the following:

   a Resource Block (RB) set indication, configured to indicate an RB set configured with PSFCH resources in a resource pool;
   first indication information, configured to indicate the PSFCH resources for PSFCH transmission and reception in a target RB set, wherein the target RB set is an RB set containing the PSFCH transmission resource;
   a first PSFCH resource group number, configured to indicate the number of PSFCH resource groups in the resource pool;
   second indication information, configured to indicate the PSFCH resources for PSFCH transmission and reception in a target PSFCH resource group, wherein the target PSFCH resource group is a resource group containing the PSFCH transmission resource;
   a second PSFCH resource group number, configured to indicate the number of PSFCH resource groups in the target RB set; or
   third indication information, configured to indicate the PSFCH resources for PSFCH transmission and reception in each PSFCH resource group in each target RB set.

3. The method as claimed in claim 2, wherein the first indication information comprises one or more bitmaps.

4. The method as claimed in claim 3, wherein the bitmap is configured to indicate the PSFCH resources in each target RB set, wherein a leftmost bit of the bitmap corresponds to a first resource with a minimum index in each target RB set, and the first resource is a Physical Resource Block (PRB) and/or an Interlaced Resource Block (IRB).

5. The method as claimed in claim 3, wherein a leftmost bit of each bitmap corresponds to a first resource with a minimum index in the RB set corresponding to the bitmap; or, the leftmost bit of each bitmap corresponds to a first resource with a minimum index in the resource pool.

6. The method as claimed in claim 2, wherein the second indication information comprises one or more bitmaps, wherein a leftmost bit of each bitmap corresponds to a first resource with a minimum index in the resource pool.

7. The method as claimed in claim 1, wherein the determining the PSFCH transmission resource comprises:

    determining a relationship between PSFCH resources and subchannels and/or PSSCH slots;
    determining a PSFCH candidate resource set; and
    determining the PSFCH transmission resource in the PSFCH candidate resource set.

8. The method as claimed in claim 7, wherein the determining the relationship between PSFCH resources and subchannels and/or PSSCH slots comprises any one of the following:

    determining the PSFCH resource allocated to one subchannel in one PSSCH slot according to at least one of a PSFCH resource configuration period, a PSSCH slot index value in a PSSCH period corresponding to a PSFCH, and a subchannel index value in an RB set; or
    determining the PSFCH resource allocated to one subchannel according to a subchannel index occupied by a PSSCH, wherein the subchannel is a subchannel in the PSSCH period corresponding to the PSFCH resource, or the subchannel is a subchannel in one PSSCH slot in the PSSCH period corresponding to the PSFCH resource.

9. The method as claimed in claim 7, wherein the determining the PSFCH candidate resource set comprises any one of the following:

    determining the PSFCH candidate resource set according to a first reference subchannel occupied in a reference RB set corresponding to the PSSCH transmission; or
    determining the PSFCH candidate resource set according to a second reference subchannel corresponding to the PSSCH transmission.

10. The method as claimed in claim 9, wherein the reference RB set comprises any one of the following:

    an RB set with lowest index among all RB sets of corresponding PSSCH transmission;
    an RB set with largest index among all RB sets of the corresponding PSSCH transmission; or
    all RB sets for the corresponding PSSCH transmission.

11. The method as claimed in claim 9, wherein the first reference subchannel comprises any one of the following:

    a starting subchannel of resources occupied by the PSSCH transmission in the reference RB set; or
    all subchannels of the resources occupied by the PSSCH transmission in the reference RB set.

12. The method as claimed in claim 7, wherein the determining the PSFCH transmission resource in the PSFCH candidate resource set comprises:
    determining the PSFCH transmission resource according to at least one of the following parameters:

    first identification information, configured to indicate a source Identifier (ID) of Layer 1;
    second identification information, wherein the second identification information is a first value or an ID of the first terminal;
    PSFCH index information; or
    a slot index.

13. An apparatus for selecting sidelink resources, which is applied to a first terminal, comprising:

    an acquisition module, configured to acquire Physical Sidelink Feedback Channel (PSFCH) resource configuration information; and
    a determination module, configured to determine a PSFCH transmission resource according to the PSFCH resource configuration information, wherein the PSFCH transmission resource is configured for PSFCH transmission, and the PSFCH transmission carries Hybrid Automatic Repeat Request Acknowledgment (HARQ-ACK) information related to Physical Sidelink Shared Channel (PSSCH) reception.

14. A terminal, comprising a transceiver, a memory, a processor, and a computer program stored in the memory and runnable on the processor, wherein the processor implements the method for selecting sidelink resources as claimed in any one of claims 1 to 12 when executing the computer program.

15. A readable storage medium, in which a program or an instruction is stored, wherein the program or the instruction is executed by a processor to implement the method for selecting sidelink resources as claimed in any one of claims 1 to 12.

PSFCH ~ 101

where the PSFCH transmission resource is configured for PSFCH transmission and the PSFCH transmission carries Hybrid Automatic Repeat Request Acknowledgment HARQ-information related to Physical Sidelink Shared Channel PSSCH reception ~ 102

Fig. 1

Fig. 2A

Fig. 2B

Fig. 2C

PSFCH resource
PSFCH resource

Guard band

Fig. 2D

PRB

Non

Fig. 3

First group of PSFCH resources

Second group of PSFCH resources

Fig. 4A

Fig. 4B

Fig. 4C

Slot

Fig. 5

Fig. 6

Fig. 7A

Non

Non

Non

RB set

RB set

PSFCH resource

RB set 1

RB set 1

Fig. 7B

Slot

chan

RB set

corresponding to
RB set

RB set

RB set

Fig. 7C

Fig. 7D

Fig. 8

Common IRB

Dedicated IRB

Fig. 9

1001

1002

Fig. 10

1100

1120

Bus interface

1110

1130

Fig. 11

## INTERNATIONAL SEARCH REPORT

| | International application No. |
|---|---|
| | **PCT/CN2024/080467** |

| A. | CLASSIFICATION OF SUBJECT MATTER |
|---|---|

H04W 72/0453(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP; IEEE: 副链路, 反馈, 指示, 资源块, 集合, 时隙, 信道, 索引, sidelink, feedback, indication, RB, set, slot, channel, index, PSFCH, PSSCH, HARQ

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111435909 A (HUAWEI TECHNOLOGIES CO., LTD.) 21 July 2020 (2020-07-21) description, paragraphs [0089]-[0299] | 1-15 |
| X | CN 115915397 A (VIVO COMMUNICATION TECHNOLOGY CO., LTD.) 04 April 2023 (2023-04-04) description, paragraphs [0056]-[0335] | 1-15 |
| A | US 2021320759 A1 (ELECTRONICS & TELECOMMUNICATIONS RESEARCH INSTITUTE) 14 October 2021 (2021-10-14) entire document | 1-15 |
| A | US 2022376831 A1 (NTT DOCOMO INC.) 24 November 2022 (2022-11-24) entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 April 2024** | **08 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| International application No. |
| PCT/CN2024/080467 |

| Patent document cited in search report | | | Publication date (day/month/year) | Patent family member(s) | | | Publication date (day/month/year) |
|---|---|---|---|---|---|---|---|
| CN | 111435909 | A | 21 July 2020 | WO | 2020143732 | A1 | 16 July 2020 |
| CN | 115915397 | A | 04 April 2023 | | None | | |
| US | 2021320759 | A1 | 14 October 2021 | US | 11595160 | B2 | 28 February 2023 |
| US | 2022376831 | A1 | 24 November 2022 | WO | 2021059462 | A1 | 01 April 2021 |

Form PCT/ISA/210 (patent family annex) (July 2022)

**REFERENCES CITED IN THE DESCRIPTION**

**Patent documents cited in the description**

- CN 202310367137X